# EUROPEAN PATENT SPECIFICATION

(11) **EP 1 806 191 B1**
(45) Date of publication and mention of the grant of the patent: **04.11.2009**
(21) Application number: 06126623.5
(22) Date of filing: 20.12.2006
(51) Int. Cl.: B23B 27/00, B23B 27/10

(54) **A boring bar for internal turning**
Eine Bohrstange für internes Drehen
Barre d'alésage pour un tournage interne

(30) Priority: 10.01.2006 SE 0600039
(43) Date of publication of application: 11.07.2007
(73) Proprietor: Sandvik Intellectual Property AB, 811 81 Sandviken (SE)
(72) Inventor: Jansson, Gunnar, SE-811 60, SANDVIKEN (SE)

(56) References cited:
- JP-A- 2002 346 809
- US-A- 5 156 503
- US-A1- 2002 094 245

## Description

### Technical Field of the Invention

This invention relates to a boring bar intended for internal turning, which has a centre axis and comprises a front part, which ends in a front end surface and has a pocket that is delimited by a shelf-like surface and a ramp surface, which extends upward/rearward from the shelf surface; an insert seat intended for the receipt of a turning insert, which seat is countersunk in the shelf surface and displaced toward one side in relation to the centre axis; as well as a chip flute that is countersunk in the outside of the bar, opens in the ramp surface and is situated on the same side of the centre axis as the insert seat, an internal channel being provided for the supply of a fluid to the front part of the bar.

### Prior Art

Internal turning is carried out in pre-drilled holes or pre-formed holes, among other things in cast, extruded, or otherwise manufactured blanks of above all metal. Open holes are through going, i.e., open at opposite ends, while closed holes have only one opening and end in a bottom. The method is used foremost in applications where the requirements of dimension tolerances and surface finish are high. In comparison with external turning, internal turning is associated with certain specific difficulties, one of which is that the boring bar has to be made with a limited length, because too a long and slender bar would be subjected to unacceptably strong vibrations. For this reason, the application of the method is mostly limited to holes, the depth of which amounts to at most 3 to 6 times the bar diameter. Another difficulty is the chip evacuation. Since the desired hole must have a good surface finish, the separated, most often sharp-edged chips should not be allowed to contact the generated hole surface in an aggressive way. In other words, the chips have to be evacuated from the hole fast and efficiently. In practice, this can be effected as long as the hole is open and/or has a diameter that is sufficiently great to allow the receipt of a boring bar having a considerably smaller diameter, because in such a way an ample space is provided between the envelope surface of the bar and the hole surface, through which space the chips can pass fairly freely. However, the problem of chip evacuation is accentuated when it is desired to turn small, closed holes, i.e., holes having bottoms and diameters of down to 12 to 6 mm. In order to be able to make a stable bar that is as vibration free as possible and has the capacity of carrying a replaceable turning insert, then the bar has to be made with a diameter that is just slightly less than the diameter of the hole. The consequence of this will be that the available, annular space between the envelope surface of the bar and the hole surface is reduced to a minimum (of the size of 1 mm or less). In order to at all be able to evacuate the chips from a closed hole under such circumstances, the bar has to be made with an external chip flute in the form of a groove, which is countersunk in the envelope surface of the bar and extends a distance rearward from the front chip pocket in which the turning insert is mounted.

By US 5156503, a turning tool is previously known having a bar, which is formed with a chip flute situated axially behind a front turning insert. However, a shortcoming of this tool is that the chips may move in an uncontrolled way in the chip pocket, i.e., without the action of any means that can guide the same stably toward the chip flute. US 2002/0094245 A1 discloses a turning tool according to the preamble of claim 1.

### Objects and Features of the Invention

The present invention aims at obviating the above-mentioned shortcoming of the previously known turning tool and at providing a new, unique boring bar, which together with a turning insert forms an improved, complete turning tool. Therefore, a primary object of the invention is to provide a boring bar, which together with a turning insert forms a tool having the capability of generating holes having excellent properties in respect of surface finish as well as dimension tolerances, more precisely by guaranteeing an efficient and stably controlled chip evacuation, at the same time as the bar should be so robust that troublesome vibrations are avoided. In other words, the boring bar should be made in such a way that the greater part of the cross section area of a small hole is utilized to impart the bar stiffness, without, for that reason, risk arising of chip stopping or other effects that may jeopardize the surface finish of the hole. An additional object is to provide a boring bar that guarantees the efficient chip evacuation without becoming complicated and expensive to manufacture. Still another object is to provide a boring bar having the capability of receiving exceptionally small turning inserts, without the stability of the turning inserts in the insert seat becoming inferior. Furthermore, the boring bar should be made in such a way that a co-operating turning insert should be mountable and dismountable in a fast and easy way, without the exact space position of the cutting tip in relation to the bar running the risk of being altered between consecutive insert exchanges.

According to the invention, at least the primary object is attained by the features defined in claim 1. Preferred embodiments of the boring bar according to the invention are furthermore defined in the dependent claims.

### Brief Summary of the General Idea of the Invention

The invention is based on the intention to locate the outlet mouth of an internal channel for liquid or fluid supply far forward on the bar and on the side of the front part of the bar that is opposite the turning insert and the chip flute. In such a way, in the machining of closed holes, the fluid, usually being a cooling liquid, will pass along the topside of the turning insert toward the front opening of the chip flute, wherein the fluid will be flushed against the chips and exert a pressure thereon, so that they are compelled to move along with the liquid flow toward the chip flute.

### Further Elucidation of Prior Art

Conventional turning tools for external turning are per se usually made with internal channels for the feed of cooling liquid to the turning insert. However, in this case, the mouth of the cooling-liquid channel is placed approximately in the middle of and high up along the ramp surface of the chip pocket, in order to flush the cooling liquid from behind in the forward direction toward the turning insert, i.e., not the direction rearward toward any chip flute opening in the ramp surface. An example of operating in this manner turning tool is disclosed in US 2002/094245 A1.

### Brief Description of the Appended Drawings

In the drawings:
- Fig. 1: is a partial perspective view of a boring bar according to the invention, the bar being shown including a mounted turning insert, which together with the bar forms a complete turning tool for internal turning,
- Fig. 2: is a somewhat enlarged, perspective exploded view showing the turning insert removed from an insert seat in the front part of the bar, and with a tightening member, in the form of a screw, removed from the turning insert,
- Fig. 3: is a further enlarged perspective view showing only the front part of the bar, more precisely as viewed obliquely from the front/from above,
- Fig. 4: is an end view showing the front part of the bar as viewed straight from the front,
- Fig. 5: is a partial plan view from above of the front part of the bar,
- Fig. 6: is a partial side view of the front part of the bar, and
- Fig. 7: is an end view showing the machining of a rotating workpiece by the complete tool.

### Detailed Description of a Preferred Embodiment of the Invention

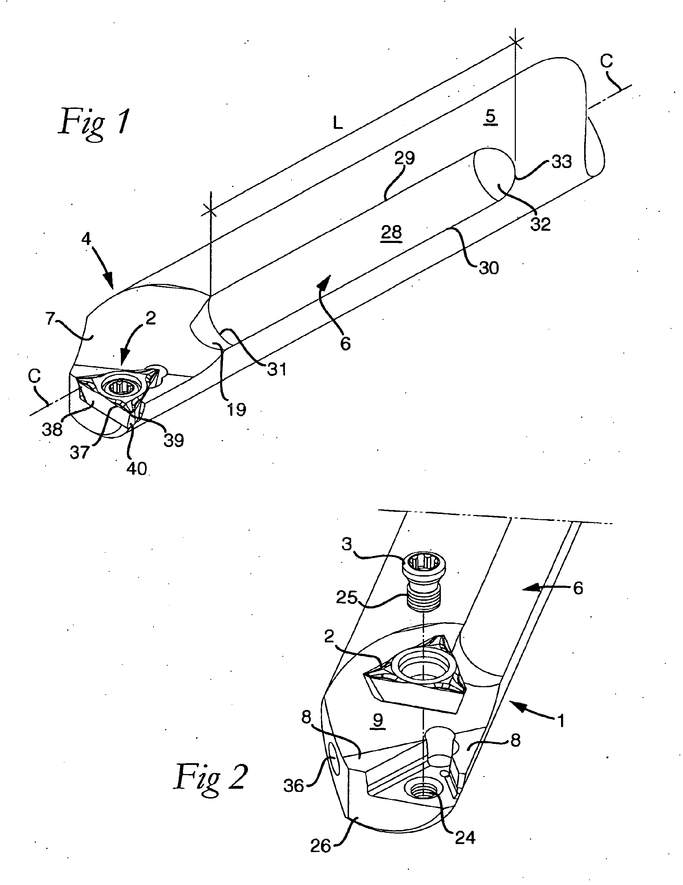

In Figs. 1 and 2, a boring bar is designated 1, which, together with a turning insert 2 and a tightening screw 3, forms a complete tool for internal turning. In the example, the bar 1 has the shape of a long narrow body having a cylindrical basic shape, which ends in a front part that in its entirety is designated 4. In the cylindrical envelope surface 5 of the bar, a countersunk chip flute 6 is formed. A central axis C is concentric with the envelope surface 5.

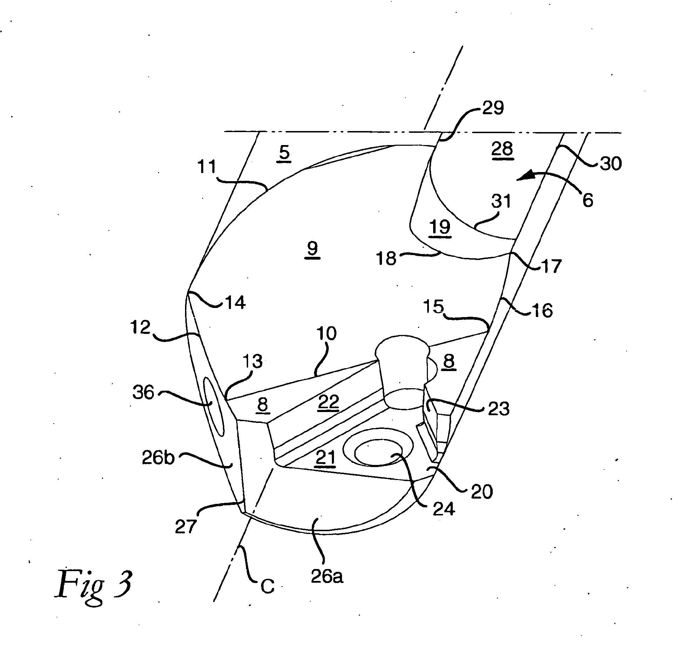

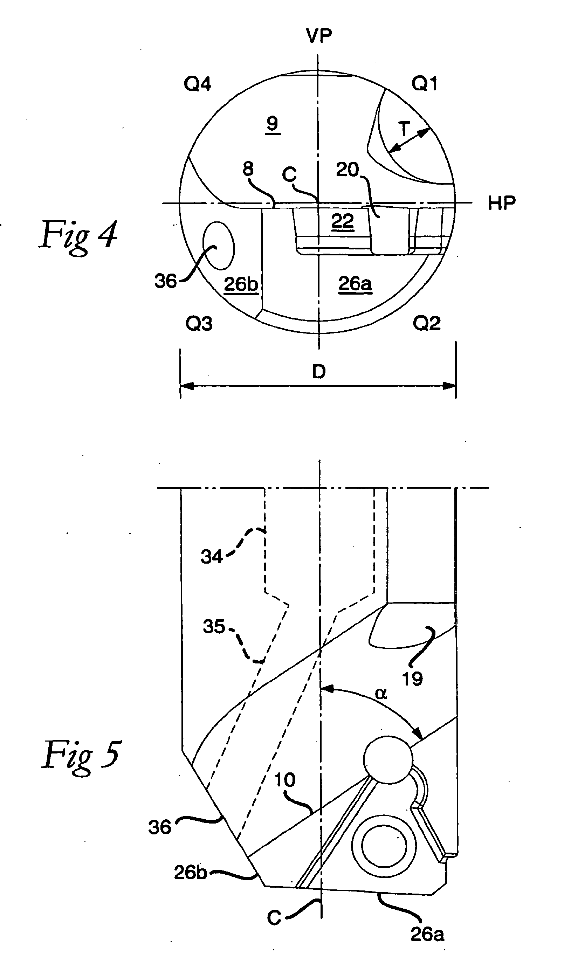

In the front part 4 of the bar, a pocket, in its entirety designated 7, is formed, which is delimited by a shelf-like surface 8 as well as by a ramp-like surface 9, which extends upward/rearward from the shelf surface 8. In the example, the shelf surface 8 is planar, while the ramp surface 9 is concavely arched and extends from a front, straight borderline 10 (see also Fig. 3) toward a rear arched borderline 11. The borderline 10 - and thereby the entire ramp surface 9 - is inclined at an acute angle α (see Fig. 5) to the centre axis C. In the example, α is about 57°. In front, the ramp surface 9 is also delimited by a borderline 12 that extends from a front end 13 of the borderline 10 to a front end 14 of the borderline 11. The rear end 15 of the borderline 10 is connected with a rear borderline 16, which extends up to a point 17 adjacent to an additional borderline 18, which delimits a crescent-like part surface 19 situated between the chip flute 6 and the ramp surface 9.

An insert seat, in its entirety designated 20, is countersunk in the shelf surface 8 and is delimited by a bottom surface 21 as well as by two diverging side support surfaces 22, 23. In the bottom surface 21, a hole 24 mouths, which in this case is formed with a female thread for the co-operation with a male thread 25 of the tightening screw 3.

The front bar part 4 ends in a front end surface designated 26, which in the example is composed of two part surfaces 26a, 26b. Said part surfaces are separated by a turning line 27 and are inclined at an obtuse angle in relation to each other. Specifically, the part surface 26a extends approximately perpendicularly to the centre axis C and forms, in the example, an angle of 125° with the part surface 26b.

In order to facilitate the further description of the invention, reference is now made to Fig. 4, which shows the bar in an end view, and in which two reference planes HP and VP are drawn, which henceforth are denominated "horizontal plane" and "vertical plane", respectively. Said reference planes form a right angle with each other and intersect each other along the centre axis C, the reference planes delimiting four similar quadrants Q1, Q2, Q3 and Q4. Among the same, the quadrants Q1 and Q2 are situated on the right side of the vertical plane VP as viewed in Fig. 4, while the quadrants Q3 and Q4 are situated on the opposite, left side. Simultaneously, the quadrants Q2 and Q3 are situated under the horizontal plane HP and the quadrants Q1 and Q4 over the same. In Fig. 4, the diameter of the bar is designated D.

With renewed reference to Fig. 1, it should be noted that the chip flute 6 is delimited by a concavely arched surface 28, which extends between two interparallel straight borderlines 29, 30 parallel to the centre axis C. A front opening of the chip flute is defined by a borderline 31, which forms a transition to the surface 19, which widens toward the borderline 18 in order to form a funnel-like inlet to the chip flute. The opposite end of the flute is a rear end surface 32. The length L of the chip flute is determined by the axial distance between the borderline 31 and the arched borderline 33 of the end surface 32. This length should amount to at least 2 to 3 times the diameter (D) of the bar, but not be greater than about 5 × D. By limiting the length of the chip flute to at most 5 × D, an optimum stiffness of the bar is guaranteed, because the reduction of material for the flute is limited to what is absolutely necessary in order to evacuate chips from the holes in which the tool will operate. If the flute would be allowed to extend all the way to the rear end (not shown) of the bar, unnecessarily much material of the bar would be wasted.

The depth T (see Fig. 4) of the chip flute should not exceed ¼ of the diameter D. The concave shape of the surface 28 may be defined by a circular line, the radius of which advantageously is greater than the depth T. However, the cross-section shape of the flute may deviate from the one shown in Fig. 4, e.g., by the fact that the radius of curvature of the surface successively decreases in the direction from the borderline 29 to the borderline 30.

Reference is now made to Fig. 5, which by dash-dotted lines illustrates how the bar is formed with a main channel 34 as well as with a branch channel 35 for the feed of, for instance, cooling liquid to the front part of the bar. The main channel 34 extends from the rear end (not visible) of the bar up to a front end at which it transforms into the inclined branch channel 35. The last-mentioned channel ends in a mouth 36, which in the shown, preferred example is situated in the part surface 26b. Specifically, the mouth 36 is located in the lower quadrant Q3 (see Fig. 4) situated beside the lower quadrant Q2 in which the insert seat 20 is situated. In other words, the mouth 36 and the insert seat 20 are situated on opposite sides of the plane VP and in different quadrants Q3, Q2, the opening of the chip flute 6 being situated in the quadrant Q1, which is above the quadrant Q2.

Reference is now made to Fig. 1, which shows the turning insert 2 mounted and fixed in the insert seat 20 by means of the screw 3. In the shown, preferred embodiment, the turning insert has a triangular basic shape and has three chip-removing main cutting edges, one of which designated 37 is indexed forward into an active position, while the two other main cutting edges (lacking reference designations) assume inactive positions. Adjacent to each main cutting edge, a first clearance surface 38 extends. At one end thereof, the main cutting edge 37 transforms into a tip, which projects radially from the envelope surface of the bar. Specifically, the main cutting edge transforms into a secondary cutting edge 39 to which a second clearance surface 40 connects, which in this case has a greater clearance angle than the surface 38. The last-mentioned surface may have a conventional clearance angle of 7°, while the surface 40 may have a clearance angle of 11-17°. Furthermore, the angle between the edges 37, 39 should be acute, e.g., in the range of 85-89°. In practice, the complete turning tool is intended to operate with moderate cutting depths, e.g., in the range of 0,05-0,5 mm, usually 0,1-0,3 mm. This means that a fairly slender chip is separated near the tip that is defined by the corner between the edges 37, 39.

### The Function and Advantages of the Invention

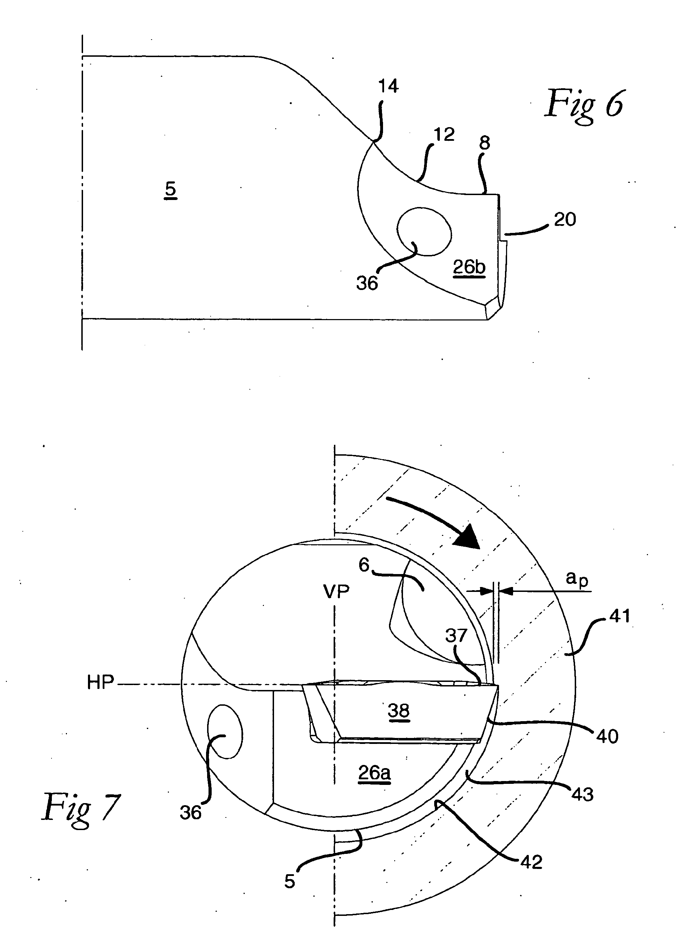

In Fig. 7, the complete turning tool is shown together with a workpiece 41, which in this case is assumed to rotate, while the tool is fixedly anchored. In the example, the tool is intended to turn a closed hole having an absolutely minimal diameter in relation to the diameter of the boring bar. For instance, the completed hole may have a diameter in the range of 6-12 mm, the diameter of the boring bar amounting to 5-10 mm and the cutting depth aₚ to some tenth of a millimetre. In doing so, a hole surface 42 is generated, which is separated from the envelope surface 5 of the boring bar by an annular gap 43, the width of which is 1 mm or less. Above the cutting edge 37, the gap is even thinner. This means that the chips that are removed in the cutting zone, i.e., in the area of the protruding tip of the turning insert, have to be evacuated via the considerably wider chip flute 6 since the hole is closed. Specifically, all chip evacuation should occur via the flute 6 without any chips contacting the generated hole surface (downstream the cutting tip).

During the turning of the closed hole, cooling liquid is flushed out via the outlet mouth 36 in a flow that mostly flushes over the turning insert in a zone from the part surface 26b toward the funnel-like inlet mouth 19 of the chip flute and further rearward through the flute 6. A certain quantity of liquid is conveyed also on the inside of the workpiece 42, rotating in the direction of the arrow in Fig. 7, so as to flush over the tip of the turning insert and in co-operation with chip breakers on the turning insert contribute to bringing the chips in the zone from the part surface 26b toward the funnel-like inlet mouth 19 of the chip flute and further rearward through the flute 6. A certain quantity of liquid is conveyed also on the inside of the workpiece 42, rotating in the direction of the arrow in Fig. 7, so as to flush over the tip of the turning insert and in co-operation with chip breakers on the turning insert contribute to bringing the chips in the direction obliquely rearward/inward. By the fact that the ramp surface 9 is concavely arched and directed obliquely rearward toward the inlet mouth of the chip flute, the main flow of liquid from the mouth 36 toward the inlet opening of the chip flute will affect the chips in a focused chip flow primarily directed toward the chip flute 6.

A fundamental advantage of the boring bar according to the invention is that the same enables internal fine turning of small, closed holes, more precisely holes the diameters of which is less than 12 mm. Thus, in practice, boring bars having a diameter D of 8 to 10 mm have been tested with success, by means of which holes have been turned having a diameter of approx. 9 to 11 mm. Thanks to the presence of the chip flute located on the same side as the insert seat as well as of the cooling liquid mouth positioned on the opposite side of the boring bar, a very efficient chip evacuation is guaranteed, something which in turn ensures that the generated hole surface obtains and retains a very good surface finish and good dimension tolerances. As a consequence of the requisite chip flute only to a limited extent makes use of material from the bar, the bar furthermore obtains an optimum stiffness, given the external conditions. This implies that the per se moderate forces acting on the turning insert and the bar do not cause troublesome vibrations.

### Feasible Modifications of the Invention

The invention is not only limited to the embodiment described above and shown in the drawings. Thus, the design of the front part of the boring bar may vary most considerably within the scope of the subsequent claims. For instance, it is feasible to spare the inclined part surface and let a single continuous front surface extend approximately perpendicularly to the centre axis, the outlet mouth of the cooling-liquid channel being located in the half of the surface that is spaced apart from the insert seat. Here, it should be mentioned that it is feasible to form the boring bar according to the invention with more than a single branch channel for cooling liquid. Hence, in addition to the channel mouth shown in the quadrant Q3, a mouth of a second branch channel could be located in the quadrant Q4, wherein liquid could be flushed out simultaneously via both channels. Furthermore, the chip flute does not need to be straight. Thus, from the front opening of the ramp surface, the chip flute may extend helicoidally along the envelope surface of the bar. Furthermore, it should be mentioned that the guiding of the chips may be effected using other fluids than liquid, e.g., air. Namely, if the cutting depth is moderate and the feeding low, the cooling demand can be provided for by means of air. The shown, complete tool may of course also be used for other machining than internal turning, such as face turning (of for instance the planar, annular end surface that surrounds the hole in question). Furthermore, the bar does not need to have the same (cylindrical) cross-section shape along the entire length thereof. Hence, the rear part of the bar may be thickened and more robust (in one or more steps).

## Claims

1. Boring bar for internal turning, which has a centre axis (C) and comprises a front part (4), which ends in a front end surface (26) and has a pocket (7) that is delimited by a shelf-like surface (8) and a ramp surface (9), which extends upward/rearward from the shelf surface; an insert seat (20) intended for the receipt of a turning insert, which seat is countersunk in the shelf surface (8) and displaced toward one side in relation to the centre axis (C); as well as a chip flute (6) that is countersunk in the outside (5) of the bar, opens in the ramp surface (9) and is situated on the same side of the centre axis (C) as the insert seat (20), an internal channel (34, 35), being provided for the supply of a fluid to the front part (4) of the bar, **characterized in that** the channel (34, 35) ends in an outlet mouth (36) which is located in said front end surface (26), more specifically on the side of the bar that is opposite the insert seat (20) in order to guide a flow of the fluid past the insert seat toward a front opening (31) of the chip flute (6).

2. Boring bar according to claim 1, ***characterized in* that** the front surface (26) includes two part surfaces, viz. a first part surface (26a) in which the insert seat (20) opens, and a second part surface (26b) that extends obliquely rearward from an inner end (27) of the first part surface (26a), the fluid channel (34, 35) mouthing in the second part surface (26b).

3. Boring bar according to claim 1 or 2, ***characterized in* that** the shelf surface (8) of the pocket (7) transforms into the ramp surface (9) via a borderline (10), which, together with the ramp surface, is inclined at an acute angle (α) to the centre axis (C), and extends between a front end (13) near the mouth (36) of the fluid channel and a rear end (15) near the front opening (31) of the chip flute (6).

4. Boring bar according to any one of the preceding claims, ***characterized in* that** the shelf surface (8) is situated under an imaginary first reference plane (HP), which intersects a second reference plane (VP) perpendicularly along the centre axis (C) in order to, together with the same, define four quadrants (Q1, Q2, Q3, Q4), a first (Q1) one of which houses the front opening (31) of the chip flute (6), an adjacent second quadrant (Q2) houses the insert seat (20), and a third quadrant (Q3) houses the outlet mouth (36) of the fluid channel.

5. Boring bar according to any one of the preceding claims,
***characterized in* that** the chip flute (6) extends between the front opening (31) and a rear end surface (32), and has a length (L) that amounts to at least three and at most five times the diameter (D) of the bar.

6. Boring bar according to any one of the preceding claims, ***characterized in* that** the chip flute (6) has a depth (T) that amounts to at most ¼ of the diameter (D) of the bar.

7. Boring bar according to any one of the preceding claims,
***characterized in* that**, between the front end (31) of the chip flute (6) and the ramp surface (9), a crescent-like part surface (19) is formed, which like a funnel widens in the direction from the flute toward the ramp surface.

## Patentansprüche

1. Bohrstange für das Innendrehen mit einer Mittenachse (C) hat und einem vorderen Teil (4), welcher in einer vorderen Stirnfläche (26) endet und eine Tasche (7) aufweist, die durch eine absatzartige Oberfläche (8) und eine Rampenfläche (9) begrenzt ist, welche sich von der absatzartigen Oberfläche nach oben/hinten erstreckt, einer Einsatzaufnahme bzw. einem Einsatzsitz (20), die bzw. der für die Aufnahme eines Einsatzes zum Drehen vorgesehen Ist, wobei der Sitz in der absatzartigen Oberfläche (8) eingesenkt und in Bezug auf die Mittenachse (C) zu einer Seite hin versetzt ist, sowie einer Spannut (6), die In der Außenseite (5) der Stange eingesenkt ist, sich in die Rampenfläche (9) hinein öffnet und auf der gleichen Seite der Mittenachse (C) liegt wie der Einsatzsitz (20), wobei ein innerer Kanal (34, 35) vorgesehen ist, um dem vorderen Teil (4) der Stange ein Fluid zuzuführen, **dadurch gekennzeichnet, daß** der Kanal (34, 35) in einer Auslaßmündung (36) endet, welche in der vorderen Stirnfläche (26) liegt und genauer gesagt auf der Seite der Stange, die dem Einsatzsitz (20) gegenüberliegt, um einen Fluidstrom an dem Einsatzsitz vorbei in Richtung auf eine vordere Öffnung (31) der Spannut (6) zu führen.

2. Bohrstange nach Anspruch 1, **dadurch gekennzeichnet, daß** die Stirnfläche (26) zwei Teilflächen hat, nämlich eine erste Teilfläche (26a), in welche sich der Einsatzsitz (20) öffnet, und eine zweite Teilfläche (26b), welche sich von einem inneren Ende (27) der ersten Teilfläche (26a) aus schräg nach hinten erstreckt, wobei der Fluidkanal (34, 35) in der zweiten Teilfläche (26b) mündet.

3. Bohrstange nach Anspruch 1 oder 2, **dadurch gekennzeichnet, daß** die absatzartige Oberfläche (8) der Tasche (7) über eine Grenzlinie (10), die ebenso wie die Rampenfläche unter einem spitzen Winkel (α) zur Mittenachse (C) geneigt ist, in die Rampenfläche (9) übergeht und sich zwischen einem vorderen Ende (13) in der Nähe der Mündung (36) des Fluidkanals und einem hinteren Ende (15) in der Nähe der vorderen Öffnung (31) der Spannut (6) erstreckt.

4. Bohrstange nach einem der vorangegangenen Ansprüche, **dadurch gekennzeichnet, daß** die absatzartige Oberfläche (8) unter einer imaginären ersten Referenzebene (HP) liegt, welche eine zweite Referenzebene (VP) senkrecht entlang der Mittenachse (C) schneidet, um zusammen mit dieser vier Quadranten (Q1, Q2, Q3, Q4) zu definieren, von welchen ein erster Quadrant (Q1) die vordere Öffnung (31) der Spannut (6) aufweist, ein dazu benachbarter zweiter Quadrant (Q2) den Einsatzsitz (20) aufweist und ein dritter Quadrant (Q3) die Auslaßmündung (36) des Fluidkanals aufweist.

5. Bohrstange nach einem der vorangegangenen Ansprüche, **dadurch gekennzeichnet, daß** die Spannut (6) sich zwischen der vorderen Öffnung (31) und einer hinteren Stirnfläche (32) erstreckt und eine Länge (L) hat, die wenigstens das Dreifache und höchstens das Fünffache des Durchmessers (D) der Stange beträgt.

6. Bohrstange nach einem der vorangegangenen Ansprüche, **dadurch gekennzeichnet, daß** die Spannut (6) eine Tiefe (T) hat, welche höchstens 1/4 des Durchmessers (D) der Stange beträgt.

7. Bohrstange nach einem der vorangegangenen Ansprüche, **dadurch gekennzeichnet, daß** zwischen dem vorderen Ende (31) der Spannut (6) und der Rampenfläche (9) eine sichelförmige Teilfläche (19) gebildet ist, welche sich wie ein Trichter in der Richtung von der Nut zur Rampenfläche hin aufweitet.

## Revendications

1. Barre d'alésage pour un tournage interne, présentant un axe central (C) et comprenant une partie avant (4), s'achevant en une surface d'extrémité avant (26) et ayant une poche (7) délimitée par une surface analogue à une étagère (8) et une surface en rampe (9), s'étendant vers le haut/vers l'arrière à partir de la surface en étagère ; un siège pour plaquette (20), prévu pour la réception d'une plaquette de tournage, ledit siège étant en contre-dépouille dans la surface en étagère (8) et décalé vers un côté par rapport à l'axe central (C) ; ainsi qu'une cannelure à copeaux (6), qui est conformée en contre-dépouille dans l'extérieur (5) de la barre, débouchant dans la surface en rampe (9) et située sur le même côté de l'axe central (C) que le siège à plaquette (20), un canal interne (34, 35) étant prévu pour l'alimentation d'un fluide vers la partie avant (4) de la barre, **caractérisée en ce que** le canal (3a, 35) s'achève en une embouchure de sortie (36) située dans ladite surface d'extrémité avant (26), plus spécifiquement sur le côté de la barre opposé au siège de plaquette (20), de manière à guider un flux de fluide passant par le siège de plaquette vers une ouverture avant (31) de la cannelure à copeaux (6).

2. Barre d'alésage selon la revendication 1, **caractérisée en ce que** la surface avant (26) comprend deux surfaces partielles, c'est-à-dire une première surface partielle (26a) dans laquelle le siège de plaquette (20) débouche, et une deuxième surface partielle (26b), s'étendant obliquement vers l'arrière depuis une extrémité intérieure (27) de la première surface partielle (26a), le canal à fluide (34, 35) débouchant dans la deuxième surface partielle (26b).

3. Barre d'alésage selon la revendication 1 ou 2, **caractérisée en ce que** la surface en étagère (8) de la poche (7) se transforme en la surface en rampe (9), via une ligne de délimitation (10), qui, conjointement avec la surface en rampe, est inclinée sous un angle aigu (a) par rapport à l'axe central (C), et s'étend entre une extrémité avant (13) proche de l'embouchure (36) du canal à fluide et une extrémité arrière (15) proche de l'ouverture avant (31) de la cannelure à copeaux (6).

4. Barre d'alésage selon l'une quelconque des revendications précédentes, **caractérisée en ce que** la surface en étagère (8) est située sous un premier plan de référence (HP) imaginaire, coupant un deuxième plan de référence (VP) perpendiculairement le long de l'axe central (C), de manière à, conjointement avec celui-ci, définir quatre quadrants (Q1, Q2, Q3, Q4), dont un premier (Q1) loge l'ouverture avant (31) de la cannelure à copeaux (6), un deuxième quadrant (Q2) adjacent loge le siège de plaquette (20), et un troisième quadrant (Q3) loge l'embouchure (36) de sortie du canal à fluide.

5. Barre d'alésage selon l'une quelconque des revendications précédentes, **caractérisée en ce que** la cannelure à copeaux (6) s'étend entre l'ouverture avant (31) et une surface d'extrémité arrière (32), et présente une longueur (L) s'élevant à au moins trois fois et au plus cinq fois le diamètre (D) de la barre.

6. Barre d'alésage selon l'une quelconque des revendications précédentes, **caractérisée en ce que** la cannelure à copeaux (6) présente une profondeur (T) s'élevant à au plus ¼ du diamètre (D) de la barre.

7. Barre d'alésage selon l'une quelconque des revendications précédentes, **caractérisée en ce qu'** entre l'extrémité avant (31) de la cannelure à copeaux (6) et la surface en rampe (9), une surface partielle (19) analogue à un croissant est formée, allant en s'élargissant, de manière analogue à un entonnoir, dans la direction allant de la cannelure vers la surface en rampe.
